# NEUE EUROPÄISCHE PATENTSCHRIFT

(11) **EP 1 121 237 B2**
(45) Veröffentlichungstag und Bekanntmachung des Hinweises auf die Entscheidung über den Einspruch: **04.08.2010**
(45) Hinweis auf die Patenterteilung: 11.12.2002
(21) Anmeldenummer: 99952546.2
(22) Anmeldetag: 09.10.1999
(51) Int. Cl.: B29C 45/50, B29C 45/07, B29C 45/68, B29C 45/40, B29C 45/23

(54) **SPRITZGIESSMASCHINE MIT EINEM MEHRERE ANTRIEBSGRUPPEN UMFASSENDEN MODULAREN AUFBAU**
INJECTION MOLDING MACHINE HAVING A MODULAR CONSTRUCTION WHICH COMPRISES A PLURALITY OF DRIVE GROUPS
PRESSE D'INJECTION PRESENTANT UNE STRUCTURE MODULAIRE COMPRENANT PLUSIEURS GROUPES D'ENTRAINEMENT

(30) Priorität: 14.10.1998 DE 19847298
(43) Veröffentlichungstag der Anmeldung: 08.08.2001
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: PCT/EP1999/007582
(87) Internationale Veröffentlichungsnummer: WO 2000/021729

(56) Entgegenhaltungen:
- DE-A- 2 247 386
- DE-A- 2 247 386
- DE-A- 19 536 565
- DE-A- 19 536 567
- DE-A- 19 750 057
- DE-C- 19 731 833

## Beschreibung

Die Erfindung betrifft eine Spritzgießmaschine zur Verarbeitung von Kunststoffen und anderer plastifizierbarer Massen wie keramische oder pulvrige Massen mit einem mehrere Antriebsgruppen umfassenden modularen Aufbau nach dem Oberbegriff des Anspruches 1.

Ein derartiger modularer Aufbau ist zwar in seiner Gesamtheit aus dem Stand der Technik nicht bekannt, jedoch ist es aus der EP 0 576 925 A1 zum Beispiel bekannt, innerhalb einzelner Antriebsgruppen einer Spritzgießmaschine sowohl auf der Seite der Spritzgießeinheit als auch formschließseitig flüssigkeitsgekühlte elektrische Servomotoren vorzusehen. Damit können zwar derartige Motoren beliebig an einer Spritzgießmaschine eingesetzt werden, jedoch ist es erforderlich, an der Spritzgießmaschine die jeweiligen Anschlußelemente mit auszutauschen, falls andere Antriebsarten verwendet werden. Insbesondere im Werk des Herstellers müssen deshalb umfangreiche Teile vorgehalten werden, um ganz nach den Wünschen der Kunden Maschinen entsprechend aufzubauen. Dies führt zu verlängerten Lieferzeiten.

Ausgehend von diesem Stand der Technik liegt der vorliegenden Erfindung die Aufgabe zugrunde, bei einer Spritzgießmaschine der eingangs genannten Gattung die baulichen Voraussetzungen für eine erhöhte Modularität zu schaffen unter Einsatz weitestgehend identischer Bauteile.

Diese Aufgabe wird durch eine Spritzgießmaschine mit den Merkmalen des Anspruches 1 gelöst.

Durch konstruktiven Mehraufwand werden bereits im Vorfeld Anschlußmöglichkeiten an den Teilen der Spritzgießmaschine geschaffen, so daß die verbleibenden Teile der Spritzgießmaschine bereits den unterschiedlichen Anforderungen der verschiedenen Antriebsarten, sei es hydraulisch, pneumatisch, elektromechanisch, als Linearmotor oder elektromagnetisch genügen. Wird dieser Mehraufwand bei der Konstruktion getrieben, erleichtert dies später die Fertigung und verringert den Mehraufwand bei jeder Maschine, da ohne größere Probleme den Wünschen der einzelnen Kunden nachgekommen werden kann. Je mehr Schnittstellen insofern für verschiedene Antriebsarten vorgesehen sind, desto schneller ist die Maschine lieferbar. Ferner schafft diese Modularität Möglichkeiten für den Kunden selbst, die Spritzgießmaschine je nach Spritzteil zu optimieren. So kann es z.B. beim Zweifarbspritzen oder bei großem Durchsatz von Vorteil sein, die Spritzgießeinheit elektrisch zu betreiben, während es bei kleinem Durchsatz aufgrund der Geschwindigkeit von Vorteil sein kann, die Spritzgießeinheit hydraulisch zu betreiben. Aufgrund der gegebenen Modularität kann die hierfür erforderliche Anpassung der Kunde sogar selbst vornehmen.

Z.B. kann ein Rotationsübertragungselement in der Einspritzbrücke vorgesehen werden, das sowohl dafür vorgesehen ist, daß rückseitig ein Rotationsmotor angeschlossen wird oder an einer anderen Stelle ein Antriebsrad festgelegt werden kann, so daß über ein Getriebe dieses Element ansteuerbar ist. Für sämtliche Antriebe ist dabei ausreichend Raum an der Spritzgießmaschine zur Verfügung gestellt.

In der Einspritzbrücke können bauliche Elemente vorgesehen werden, die je nach Antriebsart sogar passiv sind und überhaupt nicht benötigt werden, andererseits aber die Möglichkeit schaffen; problemlos die Antriebsart umzustellen. Hierbei kann der für die verschiedenen Antriebsarten erforderliche Raum dadurch erhalten werden, daß sich auf engstem Raum diese für die verschiedenen Antriebsarten erforderlichen Bauteile kombinieren lassen.

Formschließseitig kann der bewegliche Formträger so ausgebildet sein; daß an dieselben Bauteile sowohl elektromechanische Antriebe als auch hydraulische oder pneumatische Antriebe anschließbar sind. Dabei ist nicht zu unterschätzen, daß das Bauteil insofern für die unterschiedlichen Anforderungen vorbereitet sein muß, wobei für die Hydraulik die Dichtheit ebenso gewährleistet sein muß wie für den elektromechanischen Antrieb die Krafteinleitung.

Weitere Vorteile ergeben sich aus den Unteransprüchen.

### Kurzbeschreibung der Figuren

- Fig. 1: Eine dreidimensionale Ansicht der Spritzgießeinheit mit Blick auf die Einspritzbrükke, wobei sämtliche Antriebsgruppen hydraulisch betrieben sind,
- Fig. 2: einen Schnitt durch die Spritzgießeinheit gemäß Fig. 1,
- Fig. 3: einen Schnitt gemäß Fig. 2, wobei der Dosierantrieb über ein Hochmomentmotor elektrisch erfolgt,
- Fig. 4: einen Schnitt gemäß Fig. 2, wobei das Fördermittel über ein Getriebe mit Servomotor gedreht wird,
- Fig. 5: einen Schnitt nach Linie 5-5 von Fig. 4,
- Fig. 6: einen Schnitt durch die Spritzgießeinheit im Bereich des Getriebes nach Linie 6-6 von Fig. 5,
- Fig. 7: eine dreidimensionale Ansicht von Einspritzbrücke und Getriebe,
- Fig. 8: einen Schnitt gemäß Fig. 2 mit einer veränderten Einspritzbrücke und hydraulischem Einspritzen,
- Fig. 9: einen Schnitt gemäß Fig. 8 mit einer elektromechanischen Einspritzeinheit,
- Fig. 10: einen Schnitt gemäß Fig. 8, wobei der Düsenfahrantrieb ein Linearmotor ist,
- Fig. 11: eine teilweise geschnittene Seitenansicht eines am Trägerblock befestigten Plastifizierzylinders mit einem hydraulischen Antrieb für eine Verschlußdüse,
- Fig. 12: eine Darstellung gemäß Fig. 11 mit einem elektromechanischen Antrieb für die Verschlußdüse,
- Fig. 13: eine teilweise geschnittene Seitenansicht einer hydraulisch betriebenen Formschließeinheit,
- Fig. 14: eine Darstellung gemäß Fig. 13, wobei alle Antriebe elektromechanisch erfolgen,
- Fig. 15: eine Seitenansicht einer Formschließeinheit mit elektromechanischem Schließmechanismus und hydraulischer Aufbringung der Schließkraft,
- Fig. 16: eine isometrische Darstellung der Spritzgießmaschine mit den Arbeitsgruppen.

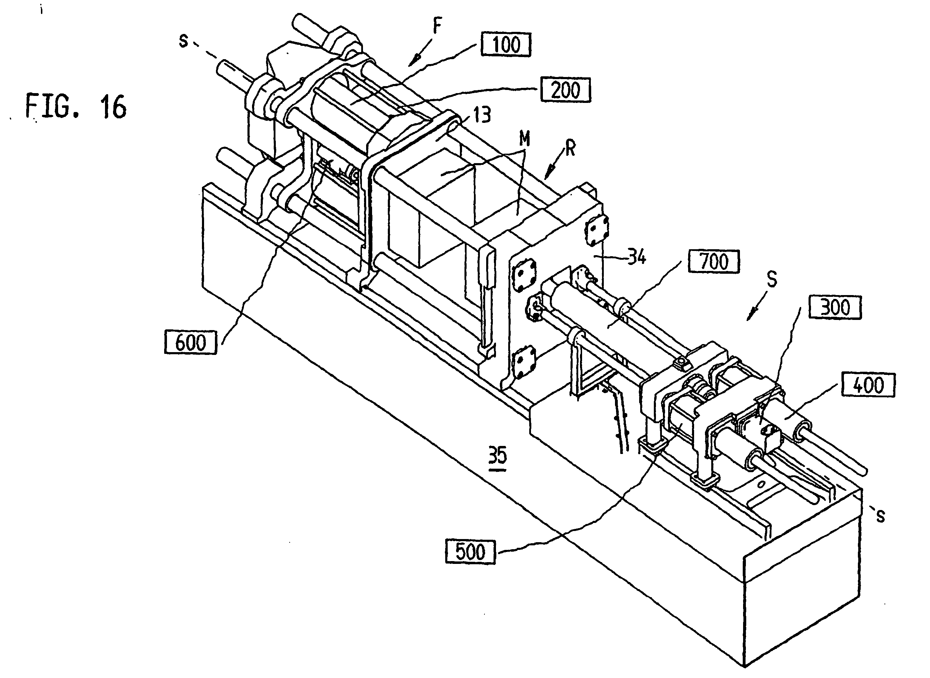

Die Spritzgießmaschine dient z.B. als Kunststoff-Spritzgießmaschine der Verarbeitung plastifizierbarer Massen wie z.B. von Kunststoffen, pulvrigen oder keramischen Massen. Die Spritzgießmaschine besitzt gemäß Fig. 16 einen modularen Aufbau mit mehreren Antriebsgruppen, die teils der Formschließeinheit F und teils der Spritzgießeinheit S zugeordnet sind. Formschließeinheit F und Spritzgießeinheit sind auf dem Maschinenfuß 35 angeordnet.

Die Formschließeinheit F besitzt einen stationären Formträger 34 und einen beweglichen Formträger 13. Zwischen den beiden Formträgern bildet sich ein Formspannraum R aus, in dem Formteile eines Spritzgießwerkzeugs M oder einer Spritzgießform am stationären Formträger 34 und am beweglichen Formträger 13 aufgenommen sind. Die Formschließeinheit besitzt einen Schließmechanismus C, der zugleich die erste Antriebsgruppe 100 zum Bewegen des beweglichen Formträgers auf den stationären Formträger 34 zu und von diesem weg darstellt. Zur Abstützung des Schließmechanismus C ist ein erstes Abstützelement 25 vorgesehen, wobei bei "seriellem Schließen" auch ein weiteres Abstützelement vorgesehen sein kann. Bei diesem seriellen Schließen wird über die erste Antriebsgruppe 100 der bewegliche Formträger bis zum Formschluß überführt, während durch eine gesonderte Antriebsgruppe die Schließkraft aufgebracht wird. Als Einrichtung zur Aufbringung der Schließkraft dient die zweite Antriebsgruppe 200, die insbesondere eingesetzt wird, wenn die erste Antriebsgruppe 100 den beweglichen Formträger 13 bis zum Formschluß der Spritzgießform M überführt hat. Bedarfsweise kann jedoch die erste Antriebsgruppe 100 mit der zweiten Antriebsgruppe 200 kombiniert durch ein und dieselbe Antriebsgruppe gebildet sein, was z.B. insbesondere bei einer hydraulischen Lösung möglich ist.

Um Kräfte, die im wesentlichen beim Aufbringen der Schließkraft entstehen, vom ersten Abstützelement 25 auf den stationären Formträger 34 zu übertragen, sind Kraftübertragungsmittel vorgesehen. Diese Kraftübertragungsmittel sind die Holme 86, die zugleich dem Schließmechanismus C und dem beweglichen Formträger 13 als Führung dienen. Als Kraftübertragungselement können auch andere Elemente vorgesehen sein, wie z.B. sogenannte "C-Bügel", die die beim Schließen und beim Spritzgießen auftretenden Kräfte um den Formspannraum R herum vom stationären Formträger 34 zum beweglichen Formträger 13 leiten, wie dies dem Fachmann bekannt ist.

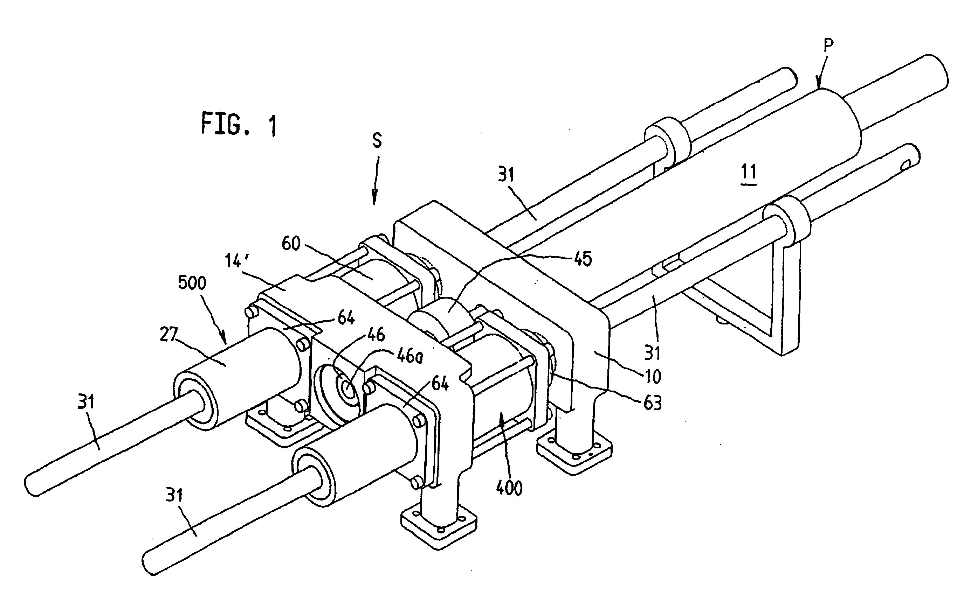

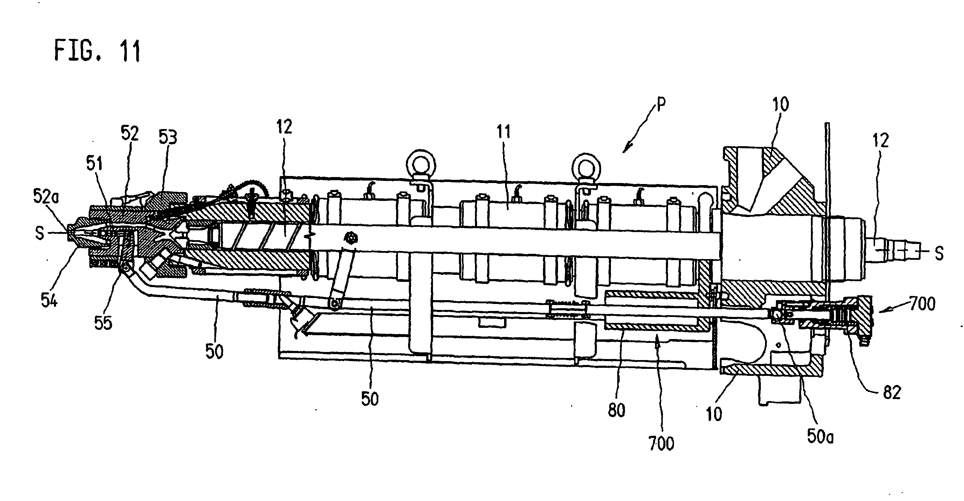

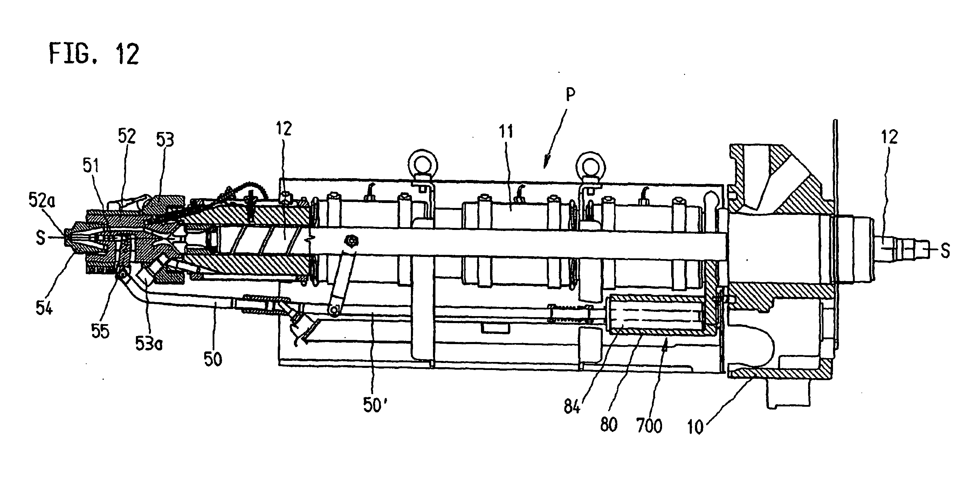

Die Spritzgießeinheit S besitzt gemäß Fig.1 eine Plastifiziereinheit P, die einen Plastifizierzylinder 11 und ein im Plastifizierzylinder aufgenommenes Fördermittel 12 aufweist. Stirnseitig endet die Spritzgießeinheit mit einem Düsenkörper 52, der eine Düsenmündung 52a aufweist, die in einer Spritzachse s-s liegt (Fig. 11,12). Die Plastifiziereinheit P ist an einem auf dem Maschinenfuß 35 entlang der Spritzachse s-s beweglich angeordneten Trägerblock 10 lösbar befestigt.

Die Spritzgießeinheit S umfaßt ferner eine Einspritzbrücke 14 sowie einen Dosierantrieb 41,41',41" für das Fördermittel 12 und die Plastifiziereinheit P als dritte Antriebsgruppe 300, die mit der Einspritzbrücke 14 verbindbar ist. Der Dosierantrieb dient insbesondere zum Rotieren des Fördermittels, da dieses Fördermittel meist eine Förderschnecke ist. Wird hier ein Förderkolben vorgesehen, fällt die dritte Antriebsgruppe 300 mit den Einspritzmittein 43 der fünften Antriebsgruppe 500 zusammen.

Als Einspritzmittel ist wenigstens ein zur Spritzachse s-s parallelachsiger Antrieb - meist zur Erzielung einer symmetrischen Krafteinleitung jedoch mehrere Antriebe - vorgesehen, der als fünfte Antriebsgruppe 500 zur Relativbewegung des Fördermittels 12 gegenüber dem Plastifizierzylinder 11 dient. Durch diese Axialbewegung des Fördermittels wird das vor der Förderschnecke befindliche plastifizierte Material in den Formhohlraum des Spritzgießwerkzeugs M eingespritzt.

Um ferner die Spritzgießeinheit S vom stationären Formträger 34 abheben zu können bzw. an diesen anlegen zu können, wird als vierte Antriebsgruppe 400 wenigstens ein zur Spritzachse s-s parallelachsiger Düsenfahrantrieb 42 vorgesehen. Auch hier können mehrere Antriebe wie im Ausführungsbeispiel vorgesehen werden.

Ist das in den Formhohlraum eingespritzte plastifizierte Material erhärtet, wird es als Formling über eine Auswerfereinheit 24 ausgeworfen, die an beliebiger Stelle innerhalb der Spritzgießmaschine, jedoch meist in der Spritzachse s-s formschließseitig angeordnet ist. Die Auswerfereinheit 24 kann jedoch auch als Kernzug ausgebildet sein. Der Antrieb von Auswerfereinheit 24 bzw. Kernzug erfolgt über eine sechste Antriebsgruppe 600.

Schließlich ist eine siebte Antriebsgruppe 700 vorgesehen, über die eine Düsennadel 51 über ein Gestänge 50 ansteuerbar ist, um die Düsenmündung 52a im Falle einer Verschlußdüse bedarfsweise zu verschließen.

Über die Spritzgießmaschine verteilt können Multifunktionselemente angeordnet sein. Wenigstens eine der Antriebsgruppen 100,200,300,400,500,600,700 ist mit der Spritzgießmaschine über wenigstens eines dieser Multifunktionselemente verbunden. Das Multifunktionselement dient insofern als Schnittstelle für den Anschluß verschiedener Antriebsarten. Es ermöglicht wahlweise den Anschluß von wenigstens zwei verschiedenen Antriebsarten wie z.B. elektromechanische Antriebe, hydraulische Antriebe, pneumatische Antriebe, Linearmotor-Antriebe oder elektromagnetische Antriebe. Durch den Einsatz dieser Multifunktionselemente wird erreicht, daß die verbleibende Spritzgießmaschine so weit als möglich unverändert bleibt. Dadurch kann die Modularität vervollkommnet werden, so daß auf die Wünsche einzelner Kunden schneller eingegangen werden kann. Gleichzeitig kann der Kunde selbst je nach Einsatzzweck kurzfristig Antriebsarten austauschen und an die jeweiligen Anforderungen anpassen. Dazu wird für die Antriebsgruppen 100,200,300,400,500,600,700 unabhängig vom jeweiligen Antrieb ausreichend Raum an der Spritzgießmaschine zur Unterbringung jeder Antriebsart zur Verfügung gestellt. Ferner sind die Multifunktionselemente so dimensioniert, daß sie auch den unterschiedlichen Belastungen, die die einzelnen Antriebsarten mit sich bringen, gerecht werden.

Dies wird im folgenden an verschiedenen Beispielen näher erläutert.

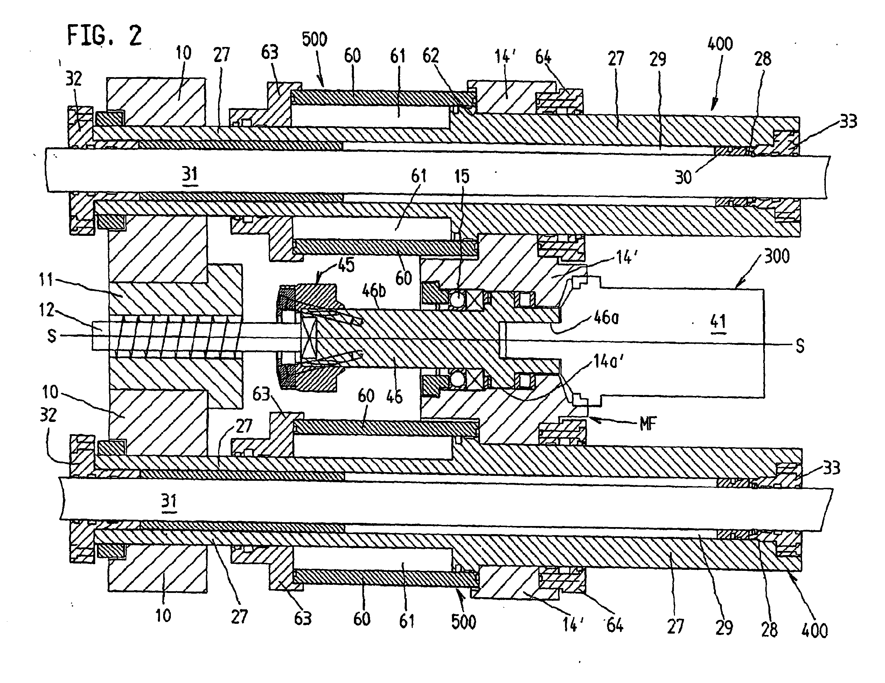

Fig. 1 zeigt eine rein hydraulische Spritzgießeinheit. Diese Spritzgießeinheit ist teilweise vergrößert im Schnitt auch in Fig. 2 dargestellt. Als fünfte Antriebsgruppe 500 dient als Einspritzmittel ein Einspritzzylinder 60 mit Zylinderraum 61 und 62. Dieser Einspritzzylinder ist durch Zylinderdeckel 63 und 64 verschlossen, die auf den Zylinder 27 einer Düsenfahreinheit der vierten Antriebsgruppe 400 gleiten. Durch Beaufschlagung der Zylinderräume 61,62 mit Hydraulikmedium oder pneumatisch wird die Einspritzbrücke 14' entlang der Spritzachse s-s bewegt, wobei bei dieser Bewegung das Fördermittel 12 im Plastifizierzylinder 11 axial bewegt wird. Der Plastifizierzylinder 11 ist lösbar am Trägerblock 10 befestigt, an dem auch der Zylinder 27 festgelegt ist. Der Zylinder 27 ist koaxial von Holmen 31 durchdrungen, die zugleich den Kolben 30 für die vierte Antriebsgruppe 400 der Düsenfahrantriebe tragen. Insofern handelt es sich bis jetzt um eine bekannte vollhydraulische Ausführungsform, bei der Einspritzzylinder und Düsenfahrantrieb koaxial zueinander angeordnet sind.

Die Einspritzbrücke 14' trägt mittig ein Rotationsübertragungselement 46, das gemeinsam mit der Einspritzbrücke 14' als Multifunktionselement für die dritte Antriebsgruppe 300 ausgebildet ist. Das Rotationsübertragungselement 46 dient zur Übertragung der Rotation eines Dosierantriebs 41, der zur Aufbereitung des zu verarbeitenden Materials dient und hierzu das als Förderschnecke ausgebildete Fördermittel dreht Das Rotationsübertragungselement 46 befindet sich in einer Ausnehmung 14a' der Einspritzbrücke 14' und ist dort über Lager 15 drehbar gelagert und in axialer Richtung zudem festgelegt.

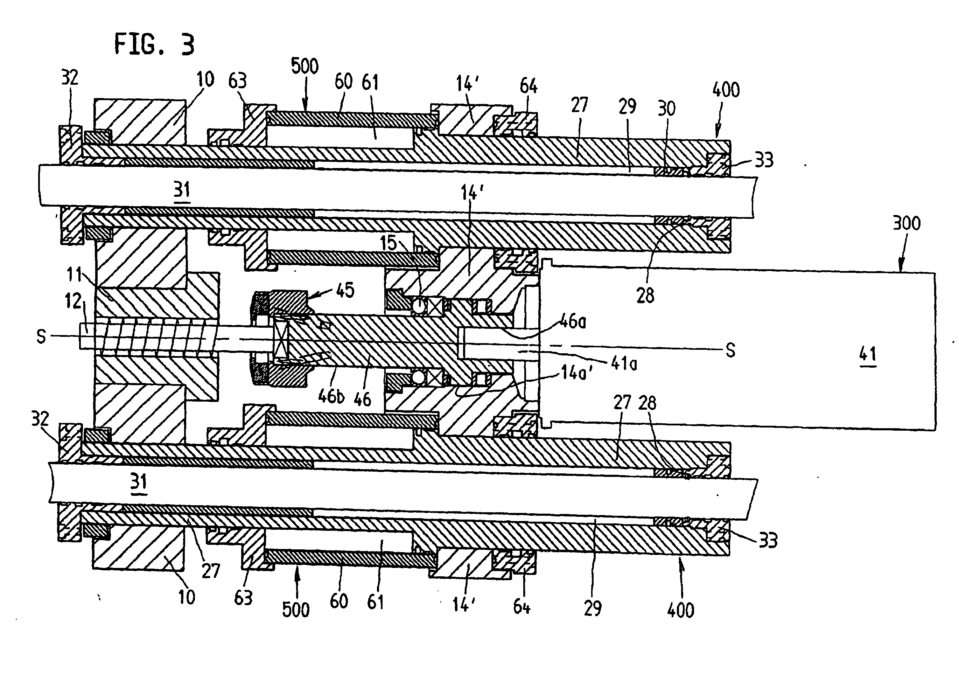

Das Rotationsübertragungselement 46 besitzt hier rückseitig eine Ausnehmung 46a, in das der Antriebsschaft 41a des Dosierantriebs 41 zur Wirkverbindung eingreift. Der Dosierantrieb ist in Fig. 2 ein hydraulischer Rotationsmotor, stattdessen kann auch ein elektrisch betriebener Hochmomentmotor wie in Fig. 3 eingesetzt werden. Beide Motoren greifen insofern an der gleichen Ausnehmung 46a an, die in Fig. 1 deutlich zu erkennen ist.

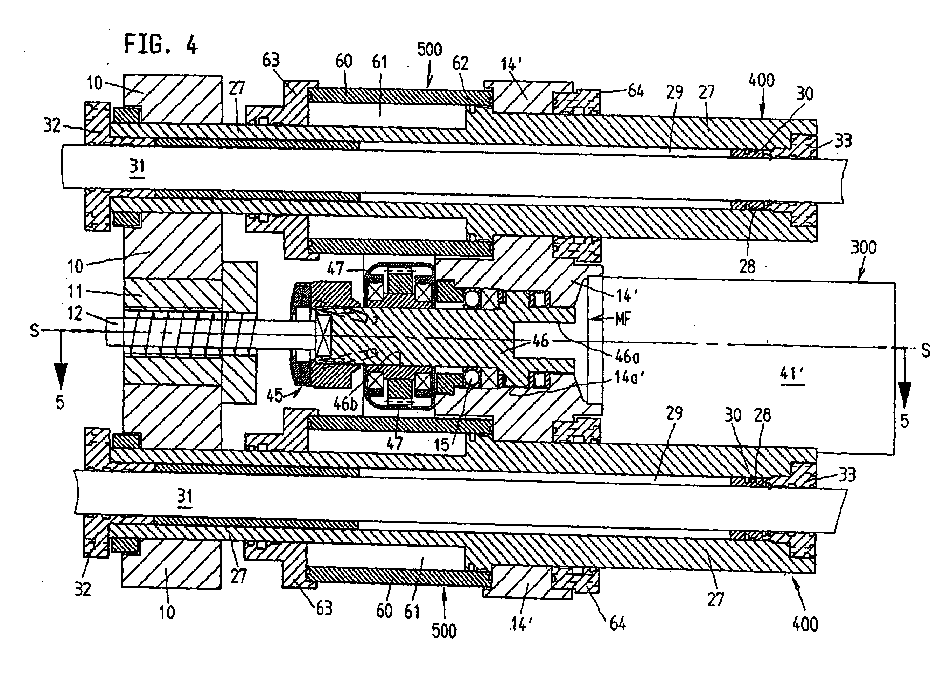

Während in Fig. 4 die fünfte Antriebsgruppe 500 und die vierte Antriebsgruppe 400 hydraulisch aufgebaut sind und die Düsenfahrbewegung durch Beaufschlagung der Zylinderkammern 28 und 29 erfolgt, ist jetzt an einem Abschnitt 46b des Rotationsübertragungselements 46 ein Getriebegehäuse 47 angeordnet. Die Ausnehmung 46a ist hier ohne Funktion. Der Abschnitt 46b ragt aus der Einspritzbrücke 14' nach vorne heraus, so daß dort das Getriebegehäuse 47 mit zugehörigem Getriebe ankoppelbar ist. Der Antrieb erfolgt über einen Dosierantrieb 41'. Der Abschnitt 46b macht dabei das hier verfolgte Prinzip deutlich. Konstruktiv wird nicht nur der Abschnitt 46b zum Anschluß des Getriebes vorgesehen, sondern auch an der Spritzgießmaschine der Raum bereitgestellt, so daß die Elemente der verschiedenen Antriebsarten jederzeit untergebracht werden können.

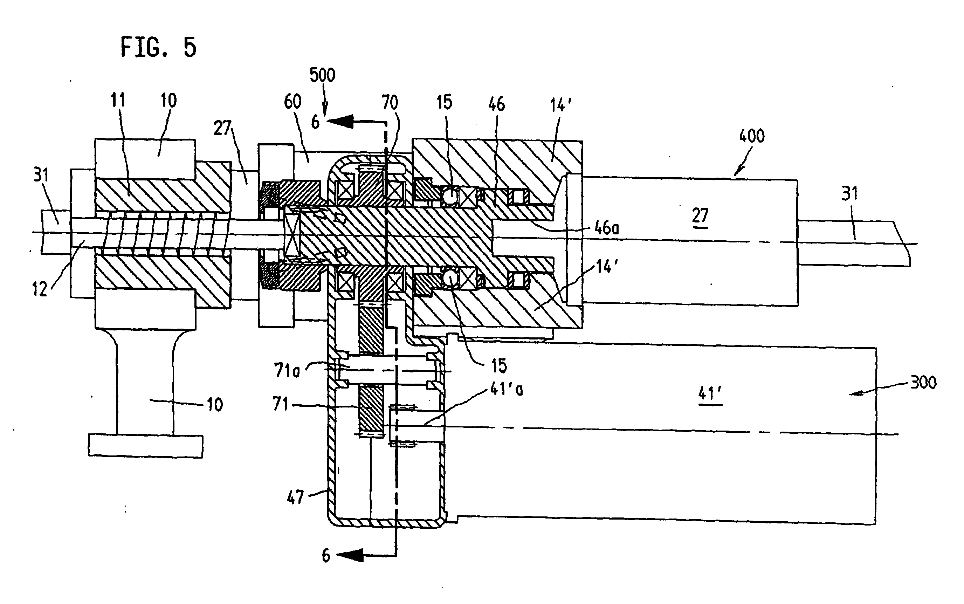

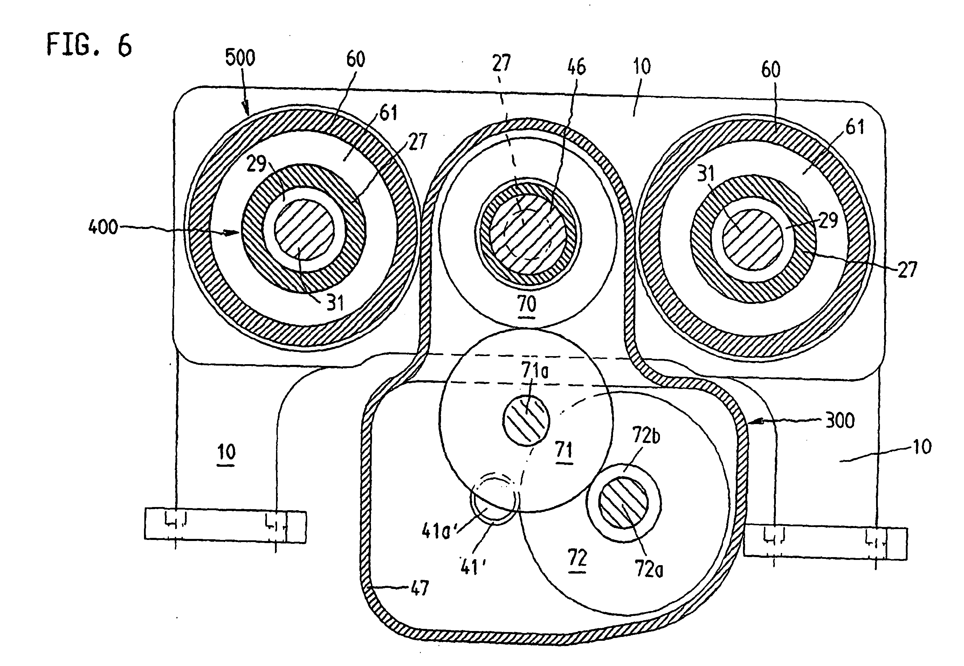

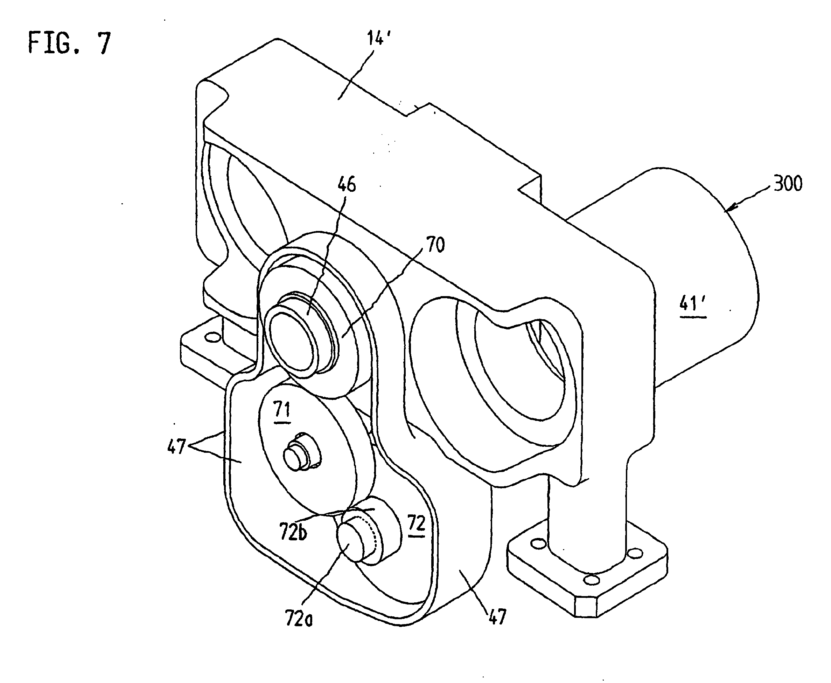

Der Aufbau von Getriebe und Dosiermotor 41' der dritten Antriebsgruppe 300 ergibt sich aus den Figuren 5 bis 7. Gemäß Fig. 6 und 7 treibt der Dosiermotor 41' mit einer Antriebswelle 41a' das Ritzel 72 an. Das Ritzel 72 ist mit der Achse 72a im Getriebegehäuse gelagert und besitzt auf der gleichen Achse ein kleineres Ritzel 72b, das mit dem Ritzel 71 kämmt. Auch das Ritzel 71 ist gemäß Fig. 5 im Getriebegehäuse 47 mit seiner Achse 71a gelagert. Das Ritzel 71 kämmt mit dem Ritzel 70, das gemäß Fig. 5 mit dem Rotationsübertragungselement 46 verbunden ist. Um den Anschluß des Getriebes mit Servomotor anstelle der Dosierantriebe 41 zu bewerkstelligen, muß der Dosiermotor 41 mit seinem Antriebsschaft 41a aus der Ausnehmung 46a entfernt werden. Dann muß der Verriegelungsmechanismus 45, der das Rotationsübertragungselement 46 mit dem Fördermittel 12 verriegelt, abgenommen werden, so daß das Getriebe gegebenenfalls mitsamt Servomotor im Abschnitt 46b angeflanscht werden kann.

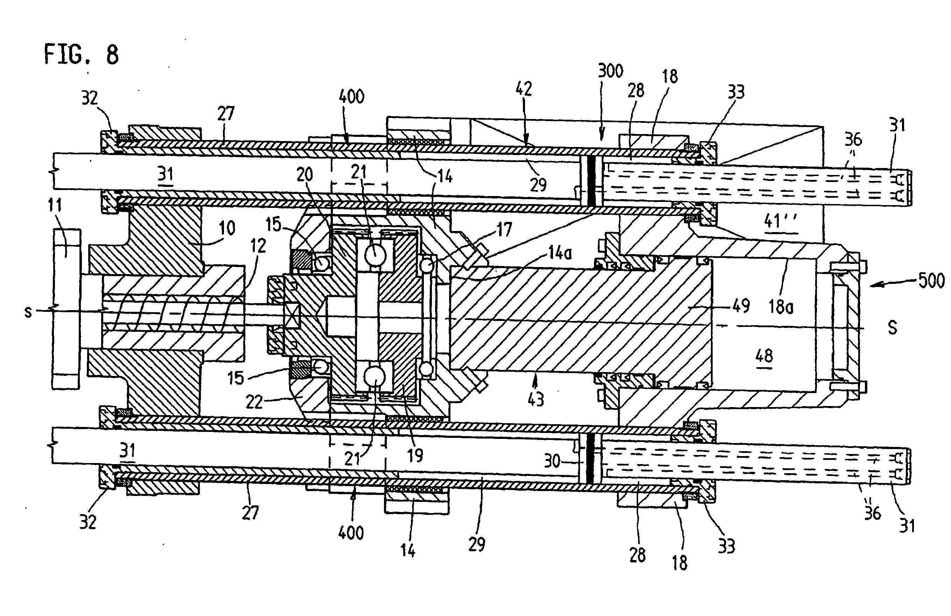

Eine weitere Ausführungsform des Dosierantriebs und vor allem der Einspritzmittel 43 zeigen die Figuren 8 bis 10. Hier ist die Einspritzbrücke 14 als Multifunktionselement für die fünfte Baugruppe 500 vorgesehen und weist eine Anlagefläche 14a auf. Diese Anlagefläche kann gemäß Fig. 8 einem als Einspritzmittel 43 ausgebildeten Druckübertragungselement als Anlage dienen. Das Druckübertragungselement stützt sich an einer Abstützung 18 ab. Gemäß Fig. 8 befindet sich die Abstützung 18 am einen Ende des Zylinders 27, während der Trägerblock am anderen Ende des Zylinders 27 angeordnet ist, so daß sich über den Zylinder 27 ein Kraftrahmen ausbildet, über den sich das Einspritzmittel 43 abstützt.

In Fig. 8 ist als Einspritzmittel 43 ein hydraulischer oder pneumatischer Kolben 49 vorgesehen. Dieser Kolben ist in einer topfartigen Ausnehmung 18a der Abstützung 18 geführt. Wird der dortige Hydraulikraum 48 beaufschlagt, wird der Kolben 49 in Richtung auf den Trägerblock gedrückt, wobei er seine Kraft über die Ausnehmung 14a auf die Einspritzbrücke überträgt, die diese Kraft auf das Fördermittel 12 überträgt. Als Dosierantrieb 41' ist ein Elektromotor vorgesehen, der über ein Getriebe das weitere Antriebselement 20 antreibt, das über Lager 15 in der Einspritzbrücke gelagert ist. In der Einspritzbrücke 14 ist ein erstes Antriebselement 19 vorgesehen, das im hier ohne Funktion ist. Es ist zu erkennen, daß der Zylinder 27 nur der Einspritzbrücke 14 und der Abstützung 18 als Führung dient, ohne daß weitere Zylinder, wie in den Fig. 1 bis 7 zwischengeschaltet sind.

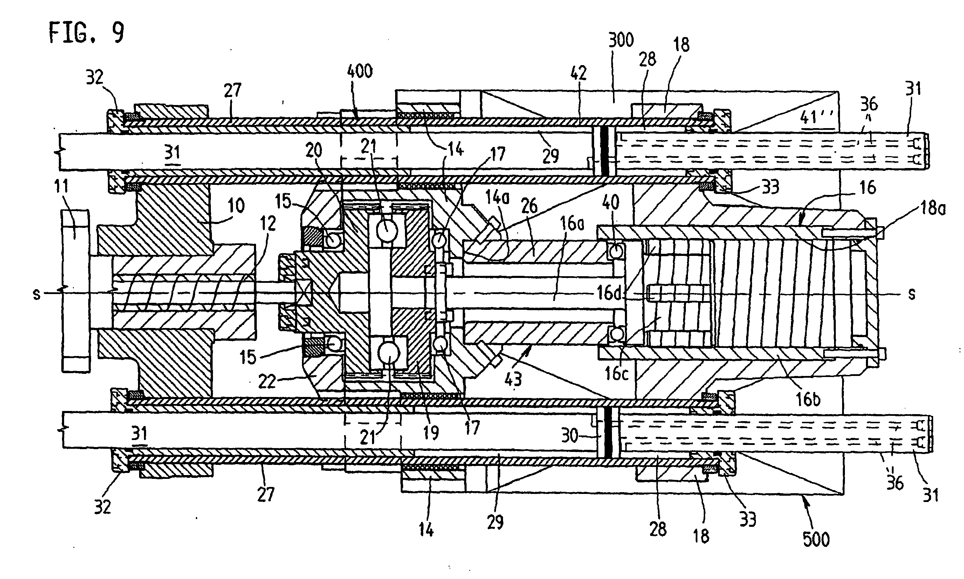

Fig. 9 unterscheidet sich von Fig. 8 dadurch, daß als Einspritzmittel 43 ein elektromechanischer Antrieb 16 vorgesehen ist, wie er aus der älteren deutschen Patentanmeldung 197 31 833.9 bekannt ist. Die topfartige Ausnehmung 18a der Abstützung 18 stützt einen Teil des elektromechanischen Spindeiantriebs ab. Das mit diesem drehfesten Teil zusammenwirkende drehbare Teil dieses Antriebs ist an der Einspritzbrücke 14 gelagert. In der topfartigen Ausnehmung kommt ein Gewinderohr 16b zu liegen, das mit einem Spindelkopf 16c zusammenwirkt, wobei der Spindelkopf 16c am Ende eines Linearbewegungsmittels 16a angeordnet ist. Dieses Linearbewegungsmittel 16a durchdringt das als Druckrohr 26 ausgebildete Druckübertragungselement koaxial und ist über das erste Antriebselement 19 angetrieben, wobei der Antrieb über einen Elektromotor der fünften Antriebsgruppe 500 erfolgt. Zwischen Spindelkopf 16c und Gewinderohr 16b sind Planeten 16d angeordnet. Das Druckrohr 26, das in der Ausnehmung 14a der Einspritzbrücke befestigt ist, taucht in jeder Stellung in das Gewinderohr 16b ein, so daß sich äußerlich der Eindruck einer Kolben-Zylinder-Einheit ergibt. Dies trägt zum Schutz der Antriebseinheit vor Schmutz bei und ermöglicht die Einbringung einer Dauerschmierung. Gewinderohr 16b und Spindelkopf stehen über Planeten 16d miteinander in Verbindung. Druckrohr 26 und Gewinderohr 16b sind mittelbar über ein Axiallagerelement 40 verbunden. Dadurch werden die beim Einspritzen auftretenden Kräfte nicht über das Linearbewegungsmittel 16a auf das Antriebselement 19, sondern von dem Gewinderohr 16b über die Planeten 16d auf den Spindelkopf 16c übertragen werden. Der Spindelkopf gibt diese Kräfte auf das Axiallagerelement 40 weiter, so daß das Druckrohr zum Druckübertragungselement wird. Über Einspritzbrücke 14, Lagerelement 17 und erstes Antriebselement 19 geht der Kraftfluß weiter über das Axiallagerelement 21 auf das weitere Antriebselement 20 und das Fördermittel 12. Daher muß das Linearbewegungsmittel 16a nur auf die Rotationskräfte und nicht mehr auf die Druckübertragung dimensioniert werden.

Wie in der älteren Patentanmeldung erläutert, sind das erste Antriebselement 19 und das weitere Antriebselement 20 koaxial zueinander angeordnet. Werden gemäß Fig. 9 beide Antriebselemente eingesetzt, dient das Axiallagerelement 21 zugleich als Kraftübertragungselement und Trennmittel zwischen den beiden Antriebselementen, die zu unterschiedlichen Zeiten von ihren jeweiligen Antrieben Dosiermotor 41" bzw. Elektromotor der fünften Baugruppe 500 angetrieben werden. Bezüglich Vorteile und weiterem Aufbau der Einrichtung wird auf die ältere Patentanmeldung 197 31 833.9 verwiesen, deren Offenbarungsgehalt insofern ausdrücklich auch zum Gegenstand der vorliegenden Anmeldung gemacht wird.

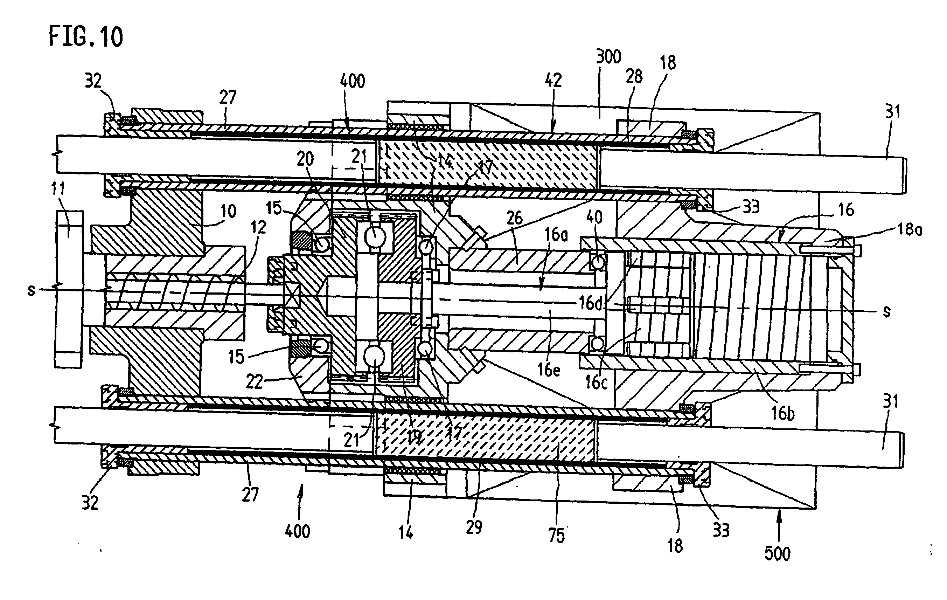

Fig. 10 unterscheidet sich von Fig. 9 dadurch, daß der Zylinder 27 das Primärelement eines Linearmotors ist. Als Düsenfahrantrieb 42 wird auf dem Hotm 31 ein Sekundärelement angeordnet. Durch entsprechende Beaufschlagung des Primärelements erfotgt eine Relativbewegung des Primärelements zum Sekundärelement und damit die Düsenfahrbewegung. Ein Vergleich zwischen Fig. 2,9 und 10 macht deutlich, daß für verschiedene Antriebsarten bei gleichbleibenden Zylinderdeckeln 32,33 nur der Zylinder entsprechend ausgetauscht werden muß. Wird auf die unterschiedlichen Volumina der Hydraulikräume 61,62 in Fig. 2 verzichtet und würde der Zylinder dafür vorbereitet, eventuell als Primärelement eines Linearmotors eingesetzt zu werden, ist grundsätzlich ein Austausch des Zylinders 27 nicht mehr erforderlich. Je nach Einsatzzweck dient der Zylinder 27 wie die Zylinderdeckel 32,33 als Multifunktionselement für die vierte Baugruppe 400, der entweder innenseitig als Zylinder für einen hydraulischen Ringkolben 30 oder als Wandung für das Sekundärelement 75 des Linearmotors dient. Außenseitig kann der Zylinder als Multifunktionselement für die fünfte Baugruppe 500 ausgestaltet sein und dient der Einspritzbrücke 14,14' als Führung oder ist gegebenenfalls die Kolbenstange eines hydraulischen Einspritzmittels 43.

Die Figuren 11, 12 zeigen verschiedene Ausführungsformen einer Plastifiziereinheit mit Verschlußdüse. Die Plastifiziereinheit P besitzt einen Plastifizierzylinder 11, in dem das Fördermittel 12 aufgenommen ist. Die Plastifiziereinheit ist lösbar am Trägerblock 10 befestigt, wobei beim Ablösen der Antriebsmechanismus für die Verschlußdüse am Plastifizierzylinder bleibt. Gemäß Fig. 11 wird die Düsennadel 51 über ein Gestänge 50 und einen Schwenkhebel 55 angesteuert. Der Düsenkörper 52 ist über eine Verbindungsmuffe 53 mit dem Plastifizierzylinder 11 verbunden. Im Düsenkörper 52 ist ein Düseneinsatz 54 angeordnet. In der Spritzachse s-s liegt die Düsenmündung 52a. In Fig. 11 endet das Gestänge 50 in einem Anschlußpunkt 50a, mit dem es an einer hydraulischen Kolben-Zylinder-Einheit festlegbar ist. Allerdings ist in Fig. 11 eine Gehäusewandung 80 vorgesehen, die mit dem Plastifizierzylinder 11 gewechselt wird. Das Gestänge 50 durchdringt diese Gehäusewandung 80. In Fig. 12 wird diese Gehäusewandung z.B. als Gehäuse eines Hohlwellenmotors eingesetzt, der über ein Wälzgewindeantrieb 84 elektromechanisch das Gestänge 50' betätigt. Das Gestänge 50' ist durch Gestänge 50 ersetzt. Ein Vergleich der beiden Darstellungen zeigt, daß sämtliche Elemente zum Anschluß des Hohlwellenmotors oder eines anderen elektrischen Motors vorgesehen sind, so daß nur Gestänge und Antriebsgruppe ausgetauscht werden muß, um z.B. beim Kunden eine Umstellung auf Reinraumbedingungen zu erreichen.

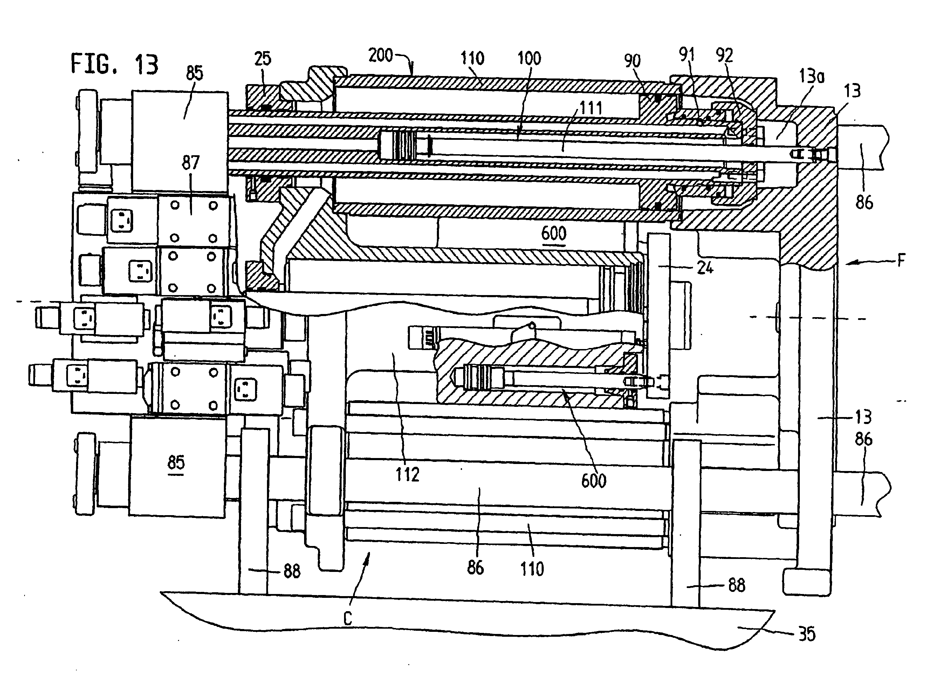

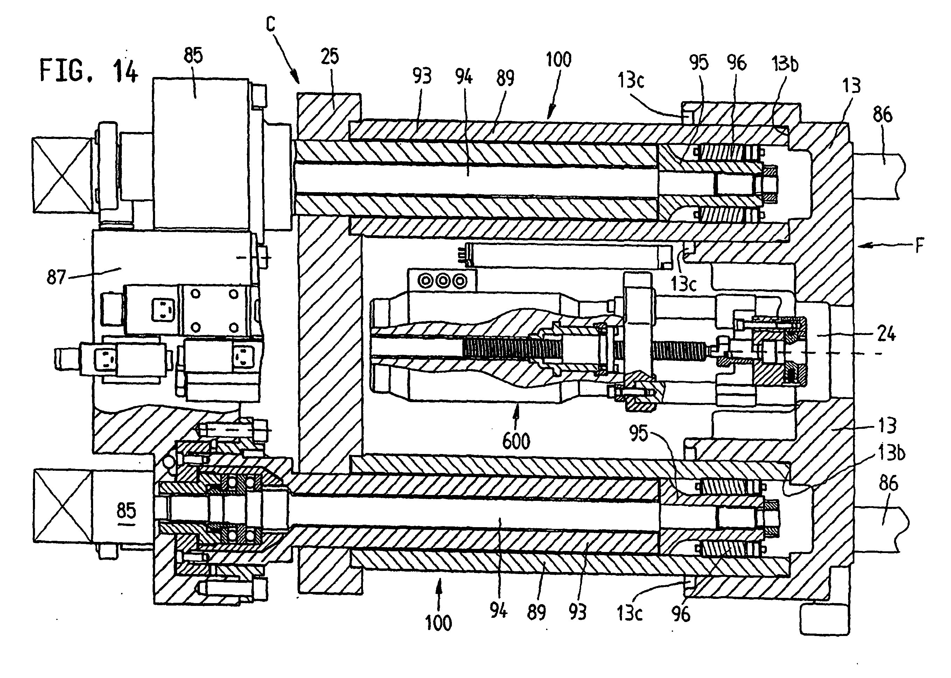

Die gewünschte Modularität läßt sich auch auf der Formschließseite bei der Formschließeinheit F verwirklichen. Gemäß Fig. 13,14 ist der bewegliche Formträger 13 als Multifunktionselement für die erste und zweite Antriebsgruppe 100,200 ausgebildet. Die Formschließeinheit stützt sich über Lagerelemente 88 auf dem Maschinenfuß 35 ab. Über die Führungsholme 86 ist der Schließmechanismus C mit dem stationären Formträger 34 verbunden. Der Schließmechanismus C bewegt den beweglichen Formträger 13, der in den Ausführungsbeispielen mit einem ersten Abstützelement 25 entweder über ein Gewinderohr 89 oder über den Zylinder 110 zu einer länglichen Bewegungseinheit in Form eines Kraftrahmens verbunden ist. Hydraulische Antriebsgruppen werden von einem Hydraulikblock 87 aus gesteuert. In der vollhydraulischen Ausgestaltung gemäß Fig. 13 besitzt der bewegliche Formträger 13 eine Ausnehmung 13a. Am Grund dieser Ausnehmung ist die Kolbenstange 111 der ersten Baugruppe 100 zum Bewegen des beweglichen Formträgers 13 bis zum Formschluß befestigt. Die Ausnehmung 13a ist in diesem Fall Teil einer Druckkammer innerhalb des Zylinders 110. Die erste Antriebsgruppe 100 ist zugleich die Kolbenstange 111 der Einrichtung zur Aufbringung der Schließkraft der zweiten Antriebsgruppe 200. Sie trägt den Kolben 90, der Überströmkanäle aufweist, die durch einen Ventilkolben 91 verschlossen werden, dessen Bewegung durch ein Begrenzungselement 92 begrenzt ist.

In Fig. 14 dagegen sind die Antriebsgruppen elektromechanisch. Dennoch sind der Hydraulikblock 87, das weitere Abstützelement 85, die Führungsholme 86 und vor allem der bewegliche Formträger 13 beibehalten. Während in Fig. 13 der Zylinder 110 der zweiten Baugruppe 200 zum Aufbringen der Schließkraft am Rande der Ausnehmung 13a festgelegt ist, dient in Fig. 14 die Ausnehmung 13a mit einer Anlagefläche 13b einem Gewinderohr 89 als Anlage. Dieses Gewinderohr steht mit Planeten 96 in Verbindung, die von einem Spindelkopf 95 angetrieben sind. Der Antrieb erfolgt über eine Antriebsstange 94, die in einem Druckrohr 93 frei beweglich rotiert. Äußerlich ergibt sich auch bei Bewegung der Anschein einer Kolben-Zylinder-Einheit. Die Schließkraft kann in zeichnerisch nicht dargestellter Weise z.B. durch einen Kurzhubzylinder aufgebracht werden, der am weiteren Abstützelement 85 angreift.

Fig. 13,14 zeigen die sechste Antriebsgruppe 600 der Auswerfereinheit 24. In Fig. 13 sind um einen Ausgleichszylinder 112 herum zwei hydraulische Kolben-Zylinder-Einheiten angeordnet, die die Auswerfereinheit 24 beaufschlagen, die auch als Kernzug ausgebildet sein kann. Gerade bei dieser Ausführungsform können entweder anstelle der hydraulischen Kolben-Zylinder-Einheiten elektromechanische Spindelantriebe eingesetzt oder z.B. die Oberfläche des Ausgleichszylinders 112 zugleich als Primärelement eines Linearmotors verwendet werden, wobei in zeichnerisch nicht dargestellter Weise eine mit dem Auswerfer 24 verbundene Hülse das Sekundärelement sein kann. Entfällt mit der hydraulischen Lösung der Ausgfeichzylinder, kann die Auswerfereinheit 24 auch gemäß Fig. 14 unmittelbar am beweglichen Formträger 13 angeordnet werden. Die Auswerfereinheit 24 ist als eigenständige bauliche Einheit ausgestaltet, wie dies aus der WO-A 97/12741 bekannt ist, deren Offenbarungsgehalt hiermit insofern ausdrücklich zum Gegenstand der vorliegenden Anmeldung gemacht wird. Der Antrieb ist dabei ein Hohlwellenmotor, der in sich das Betätigungselement aufnimmt, wobei durch entsprechende Rotationsübertragungselemente diese Auswerfereinheit als Ausschraubeinrichtung oder als Kernzug verwendbar ist. Anstelle eines derartigen Auswerfers kann auch jeder beliebige andere Auswerfer eingesetzt werden, sofern sichergestellt ist, daß ein Anschluß am beweglichen Formträger 13 möglich ist.

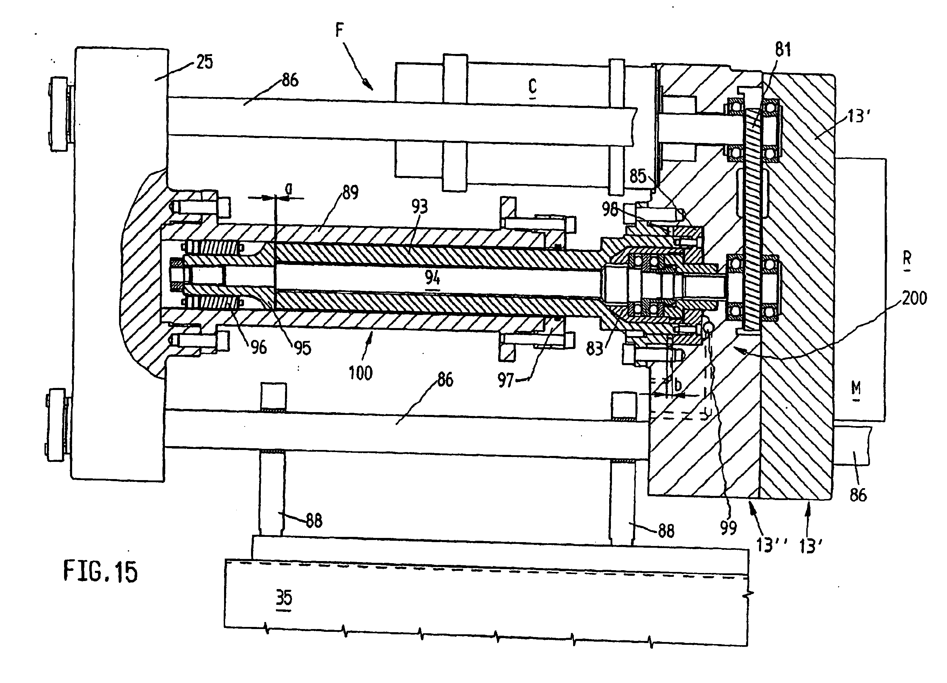

Fig. 15 zeigt den Einsatz einer elektromechanischen Antriebseinheit als erste Baugruppe 100 und einer hydraulischen Einheit als Antriebsgruppe 200. Der Aufbau entspricht dem Aufbau in der älteren Patentanmeldung 197 50 057.9. Der Schließmechanismus C treibt über einen Riementrieb 81 die Antriebsstange 94 an. Die Antriebsstange 94 endet am Spindelkopf 95, der über Planeten 96 mit einem Gewinderohr 89 in Verbindung steht. Das Gewinderohr 89 ist stirnseitig durch ein Verschlußelement 97 verschlossen, so daß sich auch hier der Eindruck einer Kolben-Zylinder-Einheit ergibt, da die Gewindeelemente äußerlich unsichtbar sind. Der bewegliche Formträger ist zweigeteilt in die Teile 13',13", um zwischen sich den Riementrieb 81 aufnehmen zu können. Die erste Antriebsgruppe 100 bringt das Spritzgießwerkzeug M bis zum Formschluß. Durch Zuschalten der zweiten Antriebsgruppe kommt die erste Antriebsgruppe 100 mit ihrem drehbaren Element 94 unter Verringerung des Abstandes a in Anlage. Dies kann jederzeit während der Bewegung dadurch geschehen, daß die Schaltkammer 98 mit Druck beaufschlagt wird, so daß das weitere Abstützelement 85, das hier ein Kolben ist, die Lagerhülse 83 in Fig. 15 nach links preßt. Bei Betätigung der ersten Antriebsgruppe 100 wird der bewegliche Formträger 13',13 " bis zu einem beliebigen Spalt zwischen den Formhälften oder bis zum Formschluß gefahren, wobei sich spätestens bei Anlage der beiden Hälften der Gießform aneinander eine Kraft und damit eine Verformung einstellt, die in Abhängigkeit des Kräfteverhältnisses zwischen der Schaltkammer 98 und der Druckkammer 99 zu einer früheren oder späteren Verringerung des Abstandes a zur Anlage des Druckrohrs 93 am Spindelkopf 95 führt. Diese Anlage verhindert eine weitere Rotation. Meist wird an einer beliebigen Stelle die Druckkammer 99 aktiv zugeschalten, so daß, gleichgültig ob ein Formschluß bereits erreicht war oder nicht, die Schaltkammer 98 aktiv oder passiv entlastet wird. Das Druckrohr 93 ist mit dem als Kolben ausgebildeten weiteren Abstützelement 85 verbunden. Die Lage des Druckrohrs ist durch den Druck in der Schaltkammer 98 beeinflußbar. Bezüglich des weiteren Aufbaus und der Arbeitsweise dieser Einrichtung wird auf die oben genannte ältere deutsche Patentanmeldung verwiesen.

Zusammengefaßt können damit folgende unterschiedliche Antriebssysteme an einer Spritzgießmaschine vorgesehen werden, wobei diese Auflistung keinen Anspruch auf Vollständigkeit erhebt.
1. Seite der Spritzgießeinheit
   a) Dosieren (Rotation)
      - hydraulisch mit Ölmotor (radial, axial, Zahnrad, Drehmoment)
      - elektrisch mit konstantem Motor oder Regetmotor und Getriebe
   b) Einspritzen (Translation)
      - hydraulisch mit Zylinder
      - elektrisch mit Umsetzung Rotation in Translation
      - pneumatisch mit Zylinder
      - elektrisch mit Linearmotor
   c) Düse fahren (Translation)
      - hydraulisch mit Zylinder
      - elektrisch mit Umsetzung Rotation in Translation
      - pneumatisch mit Zylinder
      - elektrisch mit Linearmotor
   d) Düse verschließen (Translation)
      - hydraulisch mit Zylinder
      - pneumatisch mit Zylinder
      - Elektromagnet
      - Elektromotor Rotation in Translation
      - elektrisch über Linearmotor
2. Formschließseite
   a) Werkzeug fahren (Translation)
      - hydraulisch mit Zylinder über Kniehebel oder unmittelbar
      - elektrisch mit Umsetzung Rotation in Translation
      - Linearmotor
   b) Schließkraft mit Hochdruck (Translation)
      - hydraulisch mit Zylinder über Kniehebel oder unmittelbar
      - elektrisch mit Kniehebel oder Exzenter
   c) Auswerfer (Translation)
      - hydraulisch mit Zylinder
      - pneumatisch mit Zylinder
      - elektrisch mit Umsetzung Rotation in Translation
      - elektrischer Linearmotor
3. Allgemein
   a) Kernzüge wie Ausstoßer
   b) Schutztür wie Ausstoßer

### Liste der Bezugszeichen (kein Bestandteil der Anmeldeunterlagen)

- 10: Trägerblock
- 11: Plastifizierzylinder
- 12: Fördermittel
- 13,13',13: " beweglicher Formträger
- 13a: Ausnehmung
- 13b: Anlagefläche
- 14,14': Einspritzbrücke
- 14a: Anlagefläche'
- 14a': Ausnehmung
- 15: Lagerelement für 46
- 16: elektromechanischer Antrieb
- 16a: Linearbewegungsmittel
- 16b: Gewinderohr
- 16c: Spindelkopf
- 16d: Planeten
- 17: Lagerelement für 16a
- 18: Abstützung
- 18a: topfartige Ausnehmung
- 19: erstes Antriebselement von 500
- 20: weiteres Antriebselement von 41
- 21,40: Axial-Lagerelement
- 22: Gehäusedeckel
- 24: Auswerfereinheit
- 25: erstes Abstützelement
- 26: Druckübertragungselement
- 27: Zylinder
- 28,29: Zylinderkammer
- 30: Ringkolben
- 31: Holm
- 32,33: Zylinderdeckel
- 34: stationärer Formträger
- 83: Lagerhülse
- 84: Wälzgewindeantrieb
- 85: weiteres Abstützelement
- 86: Führungsholm
- 87: Hydraulikblock
- 88: Lagerelement
- 89: Gewinderohr (Fig. 14)
- 90: Kolben (Fig. 13)
- 91: Ventilkolben
- 92: Begrenzungselement
- 93: Druckrohr
- 94: Antriebsstange
- 95: Spindelkopf
- 96: Planeten
- 97: Verschlußelement
- 98: Schaltkammer
- 99: Druckkammer
- 100: erste Antriebsgruppe
- 110: Zylinder
- 111: Kolbenstange
- 112: Ausgleichszylinder
- 35: Maschinenfuß
- 36: Bohrung
- 41,41',41: " Dosierantrieb
- 41a,41a': Antriebswelle
- 42: Düsenfahrantrieb
- 43: Einspritzmittel
- 45: Verriegelungsmechanismus
- 46: Rotationsübertragungselement
- 46a: Ausnehmung
- 46b: Abschnitt
- 47: Getriebegehäuse
- 48: Zylinderraum (Fig. 8)
- 49: Kolben
- 50,50': Gestänge für 51
- 50a: Anschlußpunkt
- 51: Düsennadel
- 52: Düsenkörper
- 52a: Düsenmündung
- 53: Verbindungsmuffe
- 54: Düseneinsatz
- 55: Schwenkhebel
- 60: Zylinder
- 61,62: Zylinderkammer
- 63,64: Zylinderdeckel
- 70,71,72: Ritzel
- 71a,72a: Achse
- 72b: Ritzel
- 75: Sekundärelement
- 80: Gehäusewandung
- 81: Riementrieb
- 82: Kolben-Zylinder-Einheit
- 200-700: zweite bis siebte Antriebsgruppe

- a: Abstand
- a-a: Wirkachse
- s-s: Spritzachse
- C: Schließmechanismus
- F: Formschließeinheit
- M: Spritzgießwerkzeug
- P: Plastifiziereinheit
- R: Formspannraum
- S: Spritzgießeinheit
- MF: Multifunktionselement

## Patentansprüche

1. Spritzgießmaschine zur Verarbeitung von Kunststoffen und anderer plastifizierbarer Materialien mit einem mehrere Antriebsgruppen umfassenden modularen Aufbau, mit
- einem Maschinenfuß (35),
- einer Formschließeinheit (F) mit
- einem mit dem Maschinenfuß (35) verbundenen stationären Formträger (34),
- einem beweglichen Formträger (13), der zwischen sich und dem stationären Formträger (34) einen Formspannraum (R) ausbildet,
- wenigstens einem Spritzgießwerkzeug (M), dessen Formteile im Formspannraum (R) am stationären Formträger (34) und am beweglichen Formträger (13) aufnehmbar sind,
- einem Schließmechanismus (C) als erste Antriebsgruppe (100) zum Bewegen des beweglichen Formträgers (13) auf den stationären Formträger (34) zu und von diesem weg unter Schließen des Spritzgießwerkzeuges (M),
- Kraftübertragungsmitteln zum Übertragen im wesentlichen der Schließkraft vom Schließmechanismus (C) auf den stationären Formträger (34),
- einer Spritzgießeinheit (S) mit
- einer Plastifiziereinheit (P), die einen Plastifizierzylinder (11) und ein im Plastifizierzylinder aufgenommenes Fördermittel (12) sowie stirnseitig eine in einer Spritzachse (s-s) liegende Düsenmündung (52a) aufweist,
- einem auf dem Maschinenfuß (35) entlang der Spritzachse (s-s) beweglich angeordneten Trägerblock (10), an dem die Plastifiziereinheit (P) lösbar befestigt ist,
- einer Einspritzbrücke (14),
- einem Dosierantrieb für das Fördermittel (12) der Plastifiziereinheit (P) als dritte Antriebsgruppe (300), die mit der Einspritzbrücke (14) verbindbar ist,
- wenigstens einem zur Spritzachse (s-s) parallelachsigen Düsenfahrantrieb (42) als vierte Antriebsgruppe (400) zum Bewegen der Düsenmündung (52a) auf das Spritzgießwerkzeug (M) zu und von diesem weg,
- wenigstens einem zur Spritzachse (s-s) parallelachsigen Einspritzmittel (43) als fünfte Antriebsgruppe (500) zur Relativbewegung des Fördermittels (12) gegenüber dem Plastifizierlylinder (11),
**dadurch gekennzeichnet, daß** wenigstens eine der Antriebsgruppen (100, 300, 400, 500) über wenigstens ein Multifunktionselement mit der Spritzgießmaschine verbindbar ist, das über zwei verschiedenartige Schnittstellen wahlweise dem Anschluß von wenigstens zwei verschiedenartigen Antriebsarten aus der Gruppe der elektromechanischen Antriebe, der hydraulischen Antriebe, der pneumatischen Antriebe, der Linearmotoren oder der elektromagnetischen Antriebe als Antriebsgruppe bei ansonsten unveränderter Spritzgießmaschine dient, wobei für die Antriebsgruppen (100, 300, 400, 500) unabhängig vom jeweiligen Antrieb Raum an der Spritzgießmaschine zur Unterbringung jeder Antriebsart zur Verfügung gestellt ist.

2. Spritzgießmaschine nach Anspruch 1, **dadurch gekennzeichnet, daß** der Schließmechanismus ein erstes Abstützelement (25) zur Abstützung aufweist und daß als zweite Antriebsgruppe (200) eine ebenfalls über ein Multifunktionselement mit der Spritzgießmaschine verbindbare Einrichtung zur Aufbringung der Schließkraft vorgesehen ist, sobald die erste Antriebsgruppe (100) den beweglichen Formträger bis zum Schließen der Spritzgießform (M) überführt hat.

3. Spritzgießmaschine nach Anspruch 1 oder 2, **dadurch gekennzeichnet, daß** als sechste Antriebsgruppe (600) eine Auswerfereinheit (24) vorgesehen ist, die ebenfalls über ein Multifunktionselement mit einem der Formträger (11,12) verbindbar ist.

4. Spritzgießmaschine nach Anspruch 3, **dadurch gekennzeichnet, daß** an dem Multifunktionselement, an dem die Auswerfereinheit (24) angeschlossen ist, auch der Auswerfer (24) als Kernzug anschließbar ist.

5. Spritzgießmaschine nach einem der Ansprüche 1 bis 4, **dadurch gekennzeichnet, daß** als siebte Antriebsgruppe (700) ein Antrieb für die Düsennadel (51) eines verschließbaren Düsenkörpers (52) vorgesehen ist, der ebenfalls über ein Multifunktionselement mit der Spritzgießmaschine verbindbar ist.

6. Spritzgießmaschine nach einem der vorhergehenden Ansprüche, **dadurch gekennzeichnet, daß** auf der Seite der Spritzgießeinheit die Einspritzbrücke (14') und ein darin drehbar gelagertes Rotationsübertragungselement (46) zur Übertragung der Rotation eines Dosierantriebs (41,41') für die dritte Antriebsgruppe (300) als Multifunktionselemente ausgebildet sind.

7. Spritzgießmaschine nach Anspruch 6, **dadurch gekennzeichnet, daß** das Rotationsübertragungselement (46) eine Ausnehmung (46a) aufweist, in das der Antriebsschaft (41a) des Dosierantriebs (41) zur Wirkverbindung eingreift, wobei der Dosierantrieb (41) ein hydraulischer Rotationsmotor oder ein elektrisch betriebener Hochmomentmotor ist.

8. Spritzgießmaschine nach Anspruch 6 oder 7, **dadurch gekennzeichnet, daß** das Rotationsübertragungselement (46) mit einem Abschnitt (46b) aus der Einspritzbrücke (14') herausragt, an dem ein Getriebegehäuse (47) mit zugehörigem Getriebe ankoppelbar ist, das von einem Dosierantrieb (41') angetrieben ist.

9. Spritzgießmaschine nach einem der Ansprüche 1 bis 5, **dadurch gekennzeichnet, daß** die Einspritzbrücke (14) als Multifunktionselement für die fünfte Antriebsgruppe (500) eine Anlagefläche (14a) aufweist, die einem als Einspritzmittel (43) ausgebildeten Druckübertragungselement als Anlage dient, das sich an einer mit der Einspritzbrücke (14) in Verbindung stehenden Abstützung (18) abstützt und vorzugsweise hydraulisch oder elektromechanisch als Einspritzmittel (43) bewegbar ist.

10. Spritzgießmaschine nach Anspruch 9, **dadurch gekennzeichnet, daß** die Abstützung (18) eine topfartige Ausnehmung (18a) aufweist, die entweder einen Zylinderraum (48) für das als Kolben (49) ausgebildete Einspritzmittel (43) bildet oder einen drehfesten Teil eines elektromechanischen Spindelantriebs aufnimmt, der mit einem an der Einspritzbrücke (14) gelagerten drehbaren Teil zusammenwirkt.

11. Spritzgießmaschine nach Anspruch 9 oder 10, **dadurch gekennzeichnet, daß** in einer topfartigen Ausnehmung (18a) der Abstützung (18) ein Gewinderohr (16b) drehfest aufgenommen ist, das mit einem Spindelkopf (16c) zusammenwirkt, wobei der Spindelkopf (16c) am Ende eines Linearbewegungsmittels (16a) angeordnet ist, das das als Rohr (26) ausgebildete Druckübertragungselement zentral durchdringt und das über ein in der Einspritzbrücke (14) angeordnetes erstes Antriebselement (19) drehbar ist.

12. Spritzgießmaschine nach einem der vorhergehenden Ansprüche, **dadurch gekennzeichnet, daß** in der Einspritzbrücke (14) ein zu einem ersten Antriebselement (19) für das Einspritzmittel (43) koaxiales Antriebselement (20) zur Rotation des Fördermittels angeordnet ist.

13. Spritzgießmaschine nach Anspruch 11 oder 12, **dadurch gekennzeichnet, daß** zwischen erstem Antriebselement (19) und weiterem Antriebselement (20) ein Axiallagerelement (21) vorgesehen ist, das einerseits als Kraftübertragungsetement und andererseits als Trennmittel zwischen den Antriebselementen (19,20) dient.

14. Spritzgießmaschine nach einem der vorhergehenden Ansprüche, **dadurch gekennzeichnet, daß** die auf den als Kraftübertragungsmitteln ausgebildeten Führungsholmen (31) angeordneten Zylinderdeckel (32,33) als Multifunktionselement für die vierte Antriebsgruppe (400) ausgebildet sind, die zwischen sich den Zylinder (27) aufnehmen, der entweder als Zylinder für einen hydraulischen Ringkolben (30) oder als Wandung für ein Sekundärelement (75) eines Linearmotors ausgebildet ist.

15. Spritzgießmaschine nach einem der vorhergehenden Ansprüche, **dadurch gekennzeichnet, daß** ein Zylinder (27) der vierten Antriebsgruppe (400) außenseitig als Multifunktionselement für die fünfte Antriebsgruppe (500) ausgebildet ist und der Einspritzbrücke (14,14') als Führung dient.

16. Spritzgießmaschine nach Anspruch 15, **dadurch gekennzeichnet, daß** der Zylinder (27) die Kolbenstange für ein hydraulisches Einspritzmittel (43) ist.

17. Spritzgießmaschine nach Anspruch 5, **dadurch gekennzeichnet, daß** am Trägerblock (10) als Multifunktionselement zur Anbringung der siebten Antriebsgruppe (700) zur Betätigung der Düsennadel (51) eine Gehäusewandung (80) befestigt ist, die entweder vom Gestänge (50) zur Betätigung der Düsennadel (51) durchdrungen ist, wenn eine hydraulische Betätigung erfolgt, oder mit einem anderen Gestänge (50') über einen Wälzgewindeantrieb (84) in wirkverbindung steht, dem die Gehäusewandung (80) als Gehäuse dient.

18. Spritzgießmaschine nach einem der vorhergehenden Ansprüche, **dadurch gekennzeichnet. daß** der bewegliche Formträger (13) als Multifunktionselement für die erste und zweite Antriebsgruppe (100,200) eine Ausnehmung (13a) aufweist, an deren Boden sich entweder ein Gewinderohr (89) eines elektromechanischen Antriebs abstützt oder die einen Teil eines hydraulischen Kolbens (90) aufnimmt, dessen Zylinder (110) am Rand der Ausnehmung (13a) festgelegt ist.

19. Spritzgießmaschine nach einem der Ansprüche 2 bis 17, **dadurch gekennzeichnet, daß** zwischen erstem Abstützelement (25) und beweglichem Formträger (13;13',13 " ) als Multifunktionselement ein weiteres Abstützelement (85) angeordnet ist, das über eine mit Hydraulikmedium beaufschlagbare Schaltkammer (98) beaufschlagbar ist, wobei die Schaltkammer (98), wenn sie unter Druck steht, die Bewegung der ersten Antriebsgruppe (100) erlaubt, während die Schaltkammer (98) die Bewegung der ersten Antriebsgruppe (100) blockiert, wenn die Schaltkammer (98) druckfrei ist, wobei der Druck des Hydraulikmediums in der Schaltkammer (98) ebenso zuschaltbar ist wie die zweite Antriebsgruppe (200).

## Claims

1. Injection moulding machine for processing plastics materials and other plasticisable materials, having a modular structure comprising a plurality of driving groups, said machine having
- a machine base (35),
- a mould closing unit (F) having
- a stationary mould carrier (34) connected to the machine base (35),
- a movable mould carrier (13), which provides a mould clamping chamber (R) between itself and the stationary mould carrier (34),
- at least one injection moulding tool (M), the moulding parts of which can be accommodated in the mould clamping chamber (R) on the stationary mould carrier (34) and on the movable mould carrier (13),
- a closing mechanism (C) as a first driving group (100) for moving the movable mould carrier (13) towards the stationary mould carrier (34) and away from said stationary mould carrier so as to close the injection moulding tool (M),
- force transmitting means for transmitting substantially the closing force from the closing mechanism (C) to the stationary mould carrier (34),
- and an injection moulding unit (S), having
- a plasticising unit (P), which comprises a plasticising cylinder (11) and a feeding means (12), which is accommodated in the plasticising cylinder, as well as a nozzle mouth (52a) on the end face, which mouth lies in an injection axis (s-s),
- a carrier block (10), which is disposed on the machine base (35) so as to be displaceable along the injection axis (s-s), and on which block the plasticising unit (P) is detachably mounted,
- an injection bridge (14),
- a metering drive (41,41') for the feeding means (12) of the plasticising unit (P) as a third driving group (300), which is connectable to the injection bridge (14),
- at least one nozzle moving drive (42), which is axis-parallel to the injection axis (s-s), as a fourth driving group (400) for moving the nozzle mouth (52a) towards the injection moulding tool (M) and away from said tool, and
- at least one injecting means (43), which is axis-parallel to the injection axis (s-s), as a fifth driving group (500) for the movement of the feeding means (12) relative to the plasticising cylinder (11),
**characterised in that** at least one of the driving groups (100, 300, 400, 500) is connectable to the injection moulding machine via at least one multifunctional element, which serves via two different types of interfaces selectively for the connection of at least two different drive types selected from the group of electromechanical drives, hydraulic drives, pneumatic drives, linear motors or electromagnetic drives as the driving group with an otherwise unchanged injection moulding machine, whereby space is made available for the driving groups (100, 300, 400, 500), independently of the particular drive, on the injection moulding machine for accommodating each type of drive.

2. Injection moulding machine according to claim 1, **characterised in that** the closing mechanism comprises a first supporting element (25) for support purposes, and **in that** an arrangement, which is also connectable to the injection moulding machine via a multifunctional element, for applying the closing force is provided as the second driving group (200), as soon as the first driving group (100) has transferred the movable mould carrier to achieve the closure of the injection mould (M).

3. Injection moulding machine according to claim 1 or 2, **characterised in that** an ejector unit (24) is provided as the sixth driving group (600), which is also connectable to one of the mould carriers (11,12) via a multifunctional element.

4. Injection moulding machine according to claim 3, **characterised in that** even the ejector (24), as a core puller, can communicate with the multifunctional element, which communicates with the ejector unit (24).

5. Injection moulding machine according to one of claims 1 to 4, **characterised in that** a drive for the nozzle needle (51) of a closable nozzle body (52) is provided as the seventh driving group (700), which drive is also connectable to the injection moulding machine via a multifunctional element.

6. Injection moulding machine according to one of the preceding claims, **characterised in that**, on the side of the injection moulding unit, the injection bridge (14') and a rotation transmitting element (46), which is rotatably mounted therein, for transmitting the rotation of a metering drive (41,41') for the third driving group (300) are configured as multifunctional elements.

7. Injection moulding machine according to claim 6, **characterised in that** the rotation transmitting element (46) has a recess (46a), in which the drive shaft (41 a) of the metering drive (41) engages for the operative connection, the metering drive (41) being an hydraulic rotary motor or an electrically operated high-torque motor.

8. Injection moulding machine according to claim 6 or 7, **characterised in that** the rotation transmitting element (46) protrudes from the injection bridge (14') with a portion (46b), to which a transmission housing (47), with an associated transmission, is connectable, which transmission is driven by a metering drive (41').

9. Injection moulding machine according to one of claims 1 to 5, **characterised in that** the injection bridge (14) has an abutment face (14a) as the multifunctional element for the fifth driving group (500), which face serves as an abutment for a pressure transmitting element, which is configured as injecting means (43) and is supported on a support (18), which communicates with the injection bridge (14), said pressure transmitting element preferably being hydraulically or electromechanically displaceable as injecting means (43).

10. Injection moulding machine according to claim 9, **characterised in that** the support (18) has a cup-like recess (18a), which either forms a cylinder chamber (48) for the injecting means (43), which is configured as piston (49), or accommodates a non-rotatable part of an electromechanical spindle drive, which co-operates with a rotatable part mounted on the injection bridge (14).

11. Injection moulding machine according to claim 9 or 10, **characterised in that** there is non-rotatably accommodated in a cup-like recess (18a) of the support (18) a threaded tube (16b) which co-operates with a spindle head (16c), the spindle head (16c) being disposed on the end of a linear moving means (16a), which centrally penetrates the pressure transmitting element, configured as tube (26), and which is rotatable via a first driving element (19) disposed in the injection bridge (14).

12. Injection moulding machine according to one of the preceding claims, **characterised in that** a driving element (20), which is coaxial with a first driving element (19) for the injecting means (43), is disposed in the injection bridge (14) for the rotation of the feeding means.

13. Injection moulding machine according to claim 11 or 12, **characterised in that** there is provided between first driving element (19) and additional driving element (20) an axial bearing element (21) which, on the one hand, serves as the force transmitting element and, on the other hand, serves as the separating means between the driving elements (19,20).

14. Injection moulding machine according to one of the preceding claims, **characterised in that** the cylinder covers (32,33), which are disposed on the guide bars (31) configured as the force transmitting means, are configured as the multifunctional element for the fourth driving group (400), which covers accommodate therebetween the cylinder (27), which is configured either as the cylinder for an hydraulic annular piston (30) or as the wall for a secondary element (75) of a linear motor.

15. Injection moulding machine according to one of the preceding claims, **characterised in that** a cylinder (27) of the fourth driving group (400) is configured on the outside as the multifunctional element for the fifth driving group (500) and serves as a guide for the injection bridge (14,14').

16. Injection moulding machine according to claim 15, **characterised in that** the cylinder (27) is the piston rod for an hydraulic injecting means (43).

17. Injection moulding machine according to claim 5, **characterised in that** a housing wall (80) is mounted on the carrier block (10) as the multifunctional element for the attachment of the seventh driving group (700) for actuating the nozzle needle (51), which wall is either penetrated by the rod assembly (50) for actuating the nozzle needle (51) when an hydraulic actuation is effected, or is operatively connected to another rod assembly (50') via a rolling thread drive (84), the housing wall (80) serving as the housing for said drive.

18. Injection moulding machine according to one of the preceding claims, **characterised in that** the movable mould carrier (13) has, as the multifunctional element for the first and second driving groups (100,200), a recess (13a) which either has a base supporting a threaded tube (89) of an electromechanical drive or accommodates a part of an hydraulic piston (90), the cylinder (110) of said piston being secured on the edge of the recess (13a).

19. Injection moulding machine according to one of claims 2 to 17, **characterised in that** there is disposed between first supporting element (25) and movable mould carrier (13;13',13") an additional supporting element (85) as the multifunctional element, which is actuatable via a switching chamber (98) actuatable with hydraulic medium, the switching chamber (98) permitting the movement of the first driving group (100) when it is under pressure, while the switching chamber (98) blocks the movement of the first driving group (100) when the switching chamber (98) is free of pressure, the pressure of the hydraulic medium in the switching chamber (98) being connectable in exactly the same way as the second driving group (200).

## Revendications

1. Presse d'injection pour traiter des matières plastiques et d'autres matières plastifiables comportant une structure modulaire présentant plusieurs groupes d'entraînement, avec
- un banc de machine (35),
- une unité de fermeture de moule (F) comportant
- un support de moule stationnaire (34) relié au banc de machine (35)
- un support de moule mobile (13), qui forme entre lui et le support de moule stationnaire (34) un espace d'extension de moule (R),
- au moins un outil d'injection (M), dont les pièces de moule peuvent être logées dans l'espace d'extension de moule (R) sur le support de moule stationnaire (34) et sur le support de moule mobile (13),
- un mécanisme de fermeture (C) en tant que premier groupe d'entraînement (100) pour déplacer le support de moule mobile (13) sur le support de moule stationnaire (34) en direction et en éloignement de celui-ci en fermant l'outil d'injection (M),
- des moyens de transmission de force pour transmettre essentiellement la force de fermeture du mécanisme de fermeture (C) au support de moule stationnaire (34)
- une unité d'injection (S) comportant
- une unité de plastification (P), qui comporte un cylindre de plastification (11) et un moyen de convoyage (12) logé dans le cylindre de plastification, ainsi que, côté frontal, une embouchure de filière (52a) reposant sur un axe d'injection (s-s),
- un bloc support (10) disposé sur le banc de machine (35) mobile le long de l'axe d'injection (s-s), sur lequel l'unité de plastification (P) est fixée de manière amovible,
- un pont d'injection (14),
- un entraînement de dosage (41, 41') pour le moyen de convoyage (12) de l'unité de plastification (P) en tant que troisième groupe d'entraînement (300) qui peut être relié avec le pont d'injection (14),
- au moins un entraînement de translation de filière (42) d'axe parallèle à l'axe d'injection (s-s) en tant que quatrième groupe d'entraînement (400) pour déplacer l'embouchure de filière (52a) en direction de l'outil d'injection (M) et en éloignement de celui-ci
- au moins un moyen d'injection (43) d'axe parallèle à l'axe d'injection en tant que cinquième groupe d'entraînement (500) pour le déplacement relatif du moyen de convoyage (12) par rapport au cylindre de plastification (11),
**caractérisée en ce qu'**au moins l'un des groupes d'entraînement (100, 300, 400, 500) peut être relié à la presse d'injection par l'intermédiaire d'au moins un élément multifonction, qui sert au moyen des deux modes des interfaces différentes d'au moins deux modes d'entraînement différents parmi le groupe des entraînements électromécaniques, des entraînements hydrauliques, des entraînements pneumatiques, des moteurs linéaires ou des entraînement électromagnétiques en tant que groupe d' entraînement pour une presse d'injection par ailleurs inchangée, de l'espace étant mis à disposition pour les groupes d' entraînement (100, 300, 400, 500) indépendamment de l'entraînement considéré, sur la presse d'injection pour monter chaque groupe d'entraînement.

2. Presse d'injection selon la revendication 1, **caractérisée en ce que** le mécanisme de fermeture comporte une premier élément d'appui (25) pour l'appui et **en ce qu'**est prévu en tant que deuxième groupe d'entraînement (200) un dispositif pouvant également être relié à la presse d'injection par l'intermédiaire d'un élément multifonction, pour appliquer la force de fermeture, dès que le premier groupe d'entraînement (100) à déplacé le support de moule mobile jusqu'à la fermeture du moule d'injection (M).

3. Presse d'injection selon la revendication 1 ou 2, **caractérisée en ce qu'**est prévue en tant que sixième groupe d'entraînement (600) une unité d'éjection (24), qui peut également être reliée à l'un des supports de moule (11, 12) par l'intermédiaire d'un élément multifonction.

4. Presse d'injection selon la revendication 3, **caractérisée en ce que** l'éjecteur (24) peut également être raccordé en tant que tire-noyau à l'élément multifonction sur lequel est raccordé l'unité d'éjection (24).

5. Presse d'injection selon l'une des revendications 1 à 4, **caractérisée en ce qu'**est prévu en tant que septième groupe d'entraînement (700) un entraînement pour l'aguille de filière (51) d'un corps de filière obturable (52), qui est reliable à la presse d'injection également par un élément multifonction.

6. Presse d'injection selon l'une des revendications précédentes, **caractérisée en ce que** sur le côté de l'unité d'injection, le pont d'injection (14') et un élément de transmission de rotation (46) supporté dedans pour transmettre la rotation d'un entraînement de dosage (41, 41') pour le troisième groupe d'entraînement (300) sont conformés en éléments multifonctions.

7. Presse d'injection selon la revendication 6, **caractérisée en ce que** l'élément de transmission de rotation (46) comporte un évidement (46a), dans lequel la tige d'entraînement (41a) de l'entraînement de dosage (41) vient en prise pour la liaison de coopération, l'entraînement de dosage (41) étant un moteur rotatif hydraulique ou un moteur à couple élevé commandé électriquement.

8. Presse d'injection selon la revendication 6 ou 7, **caractérisée en ce que** l'élément de transmission de rotation (46) fait saillie par une section (46b) hors du pont d'injection (14'), sur lequel peut être couplé avec l'engrenage correspondant un carter d'engrenage (47), qui est entraîné par un entraînement de dosage (41').

9. Presse d'injection selon l'une des revendications 1 à 5, **caractérisée en ce que** le pont d'injection (14) comporte, en tant qu'élément multifonction pour le cinquième groupe d'entraînement (500), une surface d'appui (14a) qui sert d'appui à un élément de transmission de pression conformé en moyen d'injection (43), qui prend appui sur un appui (18) en liaison avec le pont d'injection (14) et est mobile en tant que moyen d'injection de préférence hydraulique ou électromécanique.

10. Presse d'injection selon la revendication 9, **caractérisée en ce que** l'appui (18) comporte un évidement en auge (18a), qui soit constitue un espace formant cylindre (48) pour le moyen d'injection (43) conformé en piston (49) soit reçoit une pièce fixe en rotation d'un entraînement de broche électromécanique, qui coopère avec une pièce supportée en rotation sur le pont d'injection (14).

11. Presse d'injection selon la revendication 9 ou 10, **caractérisé en ce que** dans un évidement (18a) de l'appui (18) est logé fixe en rotation un tube taraudé (16b), qui coopère avec une tête de broche (16c), la tête de broche (16c) étant disposée à l'extrémité d'un moyen de déplacement linéaire (16a), qui traverse de manière centrale l'élément de transmission de pression conformé en tube (26) et qui est capable de rotation par l'intermédiaire d'un premier élément d'entraînement (19) disposé dans le pont d'injection (14).

12. Presse d'injection selon l'une des revendications précédentes, **caractérisée en ce que** dans le pont d'injection (14) est disposé un élément d'entraînement (20) coaxial par rapport à un premier élément d'entraînement (19) pour le moyen d'injection (43), pour la rotation du moyen de convoyage.

13. Presse d'injection selon la revendication 11 ou 12, **caractérisée en ce qu'**entre le premier élément d'entraînement (19) et l'élément d'entraînement supplémentaire (20) est prévu un élément formant palier axial (21), qui sert d'une part d'élément de transmission de force et d'autre part de moyen de séparation entre les éléments d'entraînement (19, 20).

14. Presse d'injection selon l'une des revendications précédentes, **caractérisée en ce que** des obturateurs de cylindre (32, 33) disposés sur les longerons de guidage (31) conformés en moyens de transmission de force, sont conformés pour le quatrième groupe d'entraînement (400) en éléments multifonctions qui reçoivent entre eux le cylindre (27), qui est conformé soit en cylindre pour un piston annulaire hydraulique (30) soit en paroi pour un élément secondaire (75) d'un moteur linéaire.

15. Presse d'injection selon l'une des revendications précédentes, **caractérisée en ce qu'**un cylindre (27) du quatrième sous-ensemble (400) est conformé extérieurement en élément multifonction pour le cinquième groupe (500) et sert de guidage au pont d'injection (14, 14').

16. Presse d'injection selon la revendication 15, **caractérisée en ce que** le cylindre (27) est la tige de piston pour un moyen d'injection hydraulique (43).

17. Presse d'injection selon la revendication 5, **caractérisée en ce que** sur le bloc support (10) est fixée, en tant qu'élément multifonction pour monter le septième groupe d'entraînement (700) pour actionner l'aiguille de filière (51), une paroi de carter (80), qui soit est traversée par la tringlerie (50) pour actionner l'aiguille de filière (51), lorsque s'opère un actionnement hydraulique, soit est en liaison de coopération avec une autre tringlerie (50') par l'intermédiaire d'un entraînement taraudé à rouleaux (84), auquel la paroi formant carter (80) sert de carter.

18. Presse d'injection selon l'une des revendications précédentes, **caractérisée en ce que** le support de moule mobile (13) comporte en tant qu'élément multifonction pour le premier et le deuxième groupes d'entraînement (100, 200) un évidement (13a), soit sur le fond duquel s'appuie un tube taraudé (89) d'un entraînement électromécanique soit qui reçoit une partie d'un piston hydraulique (90) dont le cylindre (110) est fixé au bord de l'évidement (13a).

19. Presse d'injection selon l'une des revendications 2 à 17, **caractérisée en ce qu'**entre le premier élément d'appui (25) et le support de moule mobile 13 (13, 13', 13") est disposé en tant qu'élément multifonction un élément d'appui supplémentaire (85), qui peut être mis en circuit par l'intermédiaire d'une chambre de commande (98) pouvant être alimentée en fluide hydraulique, la chambre de commande (98) permettant, lorsqu'elle est sous pression, le déplacement du premier groupe d'entraînement (100), tandis que la chambre de commande (98) bloque le déplacement du premier groupe d'entraînement (100), lorsque la chambre de commande (98) est sans pression, la pression du fluide hydraulique dans la chambre de commande (98) pouvant être tout aussi bien mise en circuit que le deuxième groupe d'entraînement (200).
